# EUROPEAN PATENT APPLICATION

(11) **EP 3 331 206 A1**
(43) Date of publication of application: **06.06.2018**
(21) Application number: 16290224.1
(22) Date of filing: 05.12.2016
(51) Int. Cl.: H04L 12/851, H04L 12/24, G06N 3/02, H04L 29/06

(54) **CLASSIFYING OF DATA PACKETS**

(71) Applicant: Alcatel Lucent, 91620 Nozay (FR)
(72) Inventor: DE VLEESCHAUWER, Danny, 2018 Antwerpen (BE); TSANG, Ing-Jyh, 2018 Antwerpen (BE)
(74) Representative: IP HILLS NV

(57) **Abstract**

According to an embodiment, the invention relates to a networking device (100) for forwarding data packets over a network, the device comprising a grouping module (101) for grouping the data packets (200) into sets (201, 202, 203) between endpoints wherein the grouping module (101) comprises a neural network (102) trained to classify data packets between endpoints into the sets based on a packet size and a packet arrival time.

## Description

### Technical Field

The present invention generally relates to the field of labelling or grouping data packets into sets when forwarding such packets between endpoints over a network such as the Internet.

### Background

Two endpoint networking nodes may exchange information over a network by data packets according to the TCP/IP protocol. The packets are routed over the network be means of intermediate networking nodes such as gateways, routers and switches. At these intermediate nodes or an originating endpoint node, the packets can be grouped into sets depending on the information they contain or which application is using the data at the endpoints. Packets may then be treated with higher or lower priority depending on the set they belong to. A set in thus a collection of packets that need the same treatment.

In differentiated services (DiffServ) an originating endpoint determines a set for the data packets it sends by setting a DiffServ code point (DSCP) in the IP header of the data packets. A drawback of this method is that intermediate nodes may not trust the originating endpoint, since it may set the DSCP such that it gets an illegitimate preferential treatment. Hence, intermediate nodes require a method in order to determine a set membership, i.e. to which set data packets belong, without relying on the originating endpoint.

One way for intermediate nodes to determine a set membership comprises of three steps. The first step comprises of grouping data packets into data flows by the use of the 5-tuple consisting of the Internet Protocol (IP) source and destination addresses of the endpoints, the transport protocol used and the transport protocol's source and destination ports. The second step attaches characteristics to each of such a data flow. A first type of these characteristics is derived from other header fields such as the application header or by inspecting payload data itself via deep packet inspection and is attached to a data flow. A second type of characteristics attached to a data flow is based on the cadence with which packets are released into a network and are, for example, a packet size distribution, a flow duration, an average rate with which packets are released, fluctuations thereof and a duration of on- and off periods of the data flow. Based on both type of characteristics, the final step determines to which set of data flow a data packet belongs to.

### Summary

The above method that relies on characteristics associated to a data flow that is determined based on the 5-tuple to group data packets in several flows suffers however from serious drawbacks. First, endpoints may use port hopping, which fragments a data flow that should be considered as a whole in smaller pieces because the two last entries of the 5-tuple keep changing and drastically alters the cadence of data flows and hence characteristics based on it. This avoids those that data packets are classified in a correct set in order to get a specific treatment. Especially, an endpoint may hop ports in such a way that its data packets are classified in a set that gets a better treatment than it deserve.

Second, an endpoint may fake several application layer headers or may encrypt its payload data such that deep packet inspection may respectively produce characteristics that lead to misclassification or may be made impossible.

It is therefore an objective of the present disclosure to alleviate the above drawbacks and to provide a solution for classifying data packets in sets without the need for deep packet inspection and that is not circumventable by port hopping.

This objective is achieved, according to a first aspect, by a networking device for forwarding data packets over a network, the device comprising a grouping module for grouping the data packets into sets between endpoints wherein the grouping module comprises a neural network trained to classify data packets between endpoints into the sets based on a packet size and a packet arrival time.

Thus, the device receives data packets, which are characterized by their source and destination addresses, IP protocol and possibly a unique sequence number, for example, an IP identification field in the IP header. Prior to the forwarding of these data packets over a network from a source to a destination endpoint, the data packets are grouped into sets. The grouping is performed by the use of a neural network which is trained to classify data packets. Besides the characteristics of the source and destination addresses and IP protocol, the grouping by the neural network is performed based on a packet size and a packet arrival time.

An advantage of using a neural network instead of state-of-the-art method based on the the 5-tuple in order to classify data packets in flows is that not all characteristics need to be used. In particular, characteristics that endpoints try to manipulate are not needed. A neural network may also be trained by only using a source and destination endpoint, IP protocol and possible a unique sequence number. Data packets may initially be grouped based on these characteristics, and by subsequently using a packet size and packet arrival time, data packets are further grouped. As the neural network will not only base the classifying on the properties of a single packet, but will also relate it to previous packets, much more information can be derived than one would expect. For example, the arrival time and packet size do not convey much information when considered alone, i.e., for a single packet, but do contain information about the set they belong to when considered in relation to previous packets. By training the neural network appropriately, information about the set a data packet belong to, i.e., about the application and/or type of data can be derived. This way any illegitimate preferential treatment by, for example, port hopping is avoided. Furthermore, there is no need to perform any deep packet inspection.

According to an embodiment, the data packets are further characterised by a transport layer source and destination ports and the neural network is further trained to classify data packets between endpoints into sets based on the transport layer source and destination ports.

By further classifying data packets based on the transport layer source and destination ports, the neural network may group data packets in a more accurate way.

According to an embodiment, the neural network comprises an auto-encoder neural network.

An auto-encoder neural network is used for unsupervised learning of features and applies backpropagation. The auto-encoder neural network therefore may be used to group data packets, wherein via backpropagation the neural network is further trained such that the grouping is performed in a more efficient way by each consecutive step. Since it is further performed in an unsupervised way, it may be implemented in several intermediate networking points in a network.

According to an embodiment, the neural network comprises a stack of auto-encoder neural networks.

In a stack of auto-encoders, an auto-encoder of one layer of the stack may use as its input the output of an auto-encoder of a layer below it in the stack. The auto-encoder at the lowest layer in the stack may use initial classifying as input and the auto-encoder at the highest layer in the stack produces a set the data packets belong to.

According to an embodiment, the auto-encoder comprises a recurrent neural network.

Such an auto-encoder based on a recurrent neural network may also be trained by a gradient-descent method through the use of a back propagation through time method. An advantage is that for each instant like, for example, upon an arrival of a data packet the network is updated.

According to an embodiment, the auto-encoder comprises a feed-forward neural network.

By using an auto-encoder based on a feed-forward neural network, data packets may be grouped in a faster way since a sequence of data packets may be received at once.

According to an embodiment, the neural network comprises a restricted Boltzmann machine.

A restricted Boltzmann machine is a stochastic neural network comprising a layer of visible units, a layer of hidden units and a bias unit. By using a restricted Boltzmann machine, the neural network may easily be implemented and be trained in a fast way.

According to a second aspect, the disclosure relates to a method comprising grouping the data packets into sets wherein the grouping comprises training to classify data packets into the sets based on a packet size and a packet arrival time.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

### Brief Description of the Drawings

Fig. 1 illustrates a device for grouping data packets according to an embodiment of the disclosure;
Fig. 2 illustrates grouping of data packets into sets according to an embodiment of the disclosure;
Fig. 3 illustrates one layer of a stack of auto-encoders for grouping data packets into sets according to an embodiment of the disclosure; and
Fig. 4 illustrates a computer system that can be configured to execute one or more embodiments of the method for forwarding data packets over a network.

### Detailed Description of Embodiment(s)

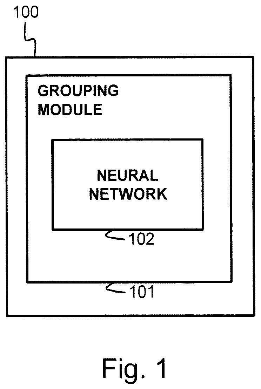

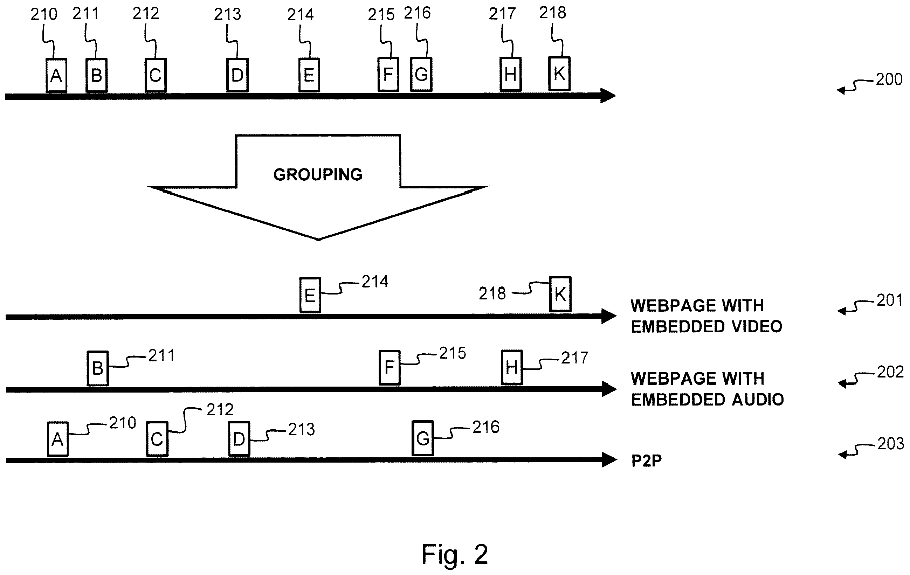

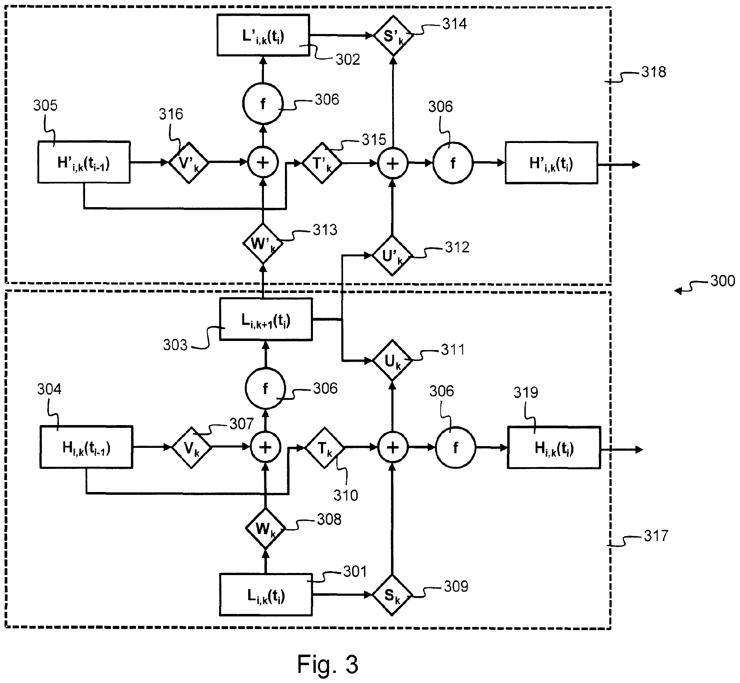

According to an embodiment, the disclosure relates to a device for forwarding data packets over a network. Figure 1 illustrates such a device 100. The device 100 comprises a grouping module 101 for grouping the data packets into sets. Figure 2 illustrates such grouping of data packets into sets. The grouping module 101 further comprises a neural network 102 trained to classify data packets between endpoints into such sets. According to an embodiment, the neural network comprises an auto-encoder neural network. Figure 3 illustrates such an auto-encoder neural network 300.

The device 100 receives data packets 200, such as, for example data packet A 210, B 211, C 212, D 213, E 214, F215, G 216, H 217 and K 218. Each of these data packets will be grouped into sets, such as 201, 202 and 203. The neural network 102 comprises, according to an embodiment, an auto-encoder neural network 300. The auto-encoder 300 labels data-packets in order to perform the classification into sets. A label may, for example, be a webpage with embedded video 201, a webpage with embedded audio 202 or a peer-to-peer network 203 and the data packets will be grouped accordingly, such for example data packets E 214 and K 218 which are grouped in set 201. In the auto-encoder 300, L_{i,k}(tᵢ) 301 and L'_{i,k}(tᵢ) 302 represented a binary representation of an i-th label before a k-th relabelling operation on time tᵢ. L_{i,k}(tᵢ) 301 and L'_{i,k}(tᵢ) 302 have the same number of bits. L_{i,k+1}(tᵢ) 303 is a binary representation of a label of an i-th packet after an k-th relabelling operation. Typically, but not necessarily, the number of values a label can take decreases as the level k increases.

Further, in the auto-encoder, H_{i,k}(tᵢ₋₁) 304 and H'_{i,k}(tᵢ₋₁) 305 represents the history that the auto-encoder neural network 300 retains. Function f 306 denotes a non-linear function, typically the logistic function f(x)=1/(1+exp(-x)) or the hyperbolic tangent function f(x)=tanh(x). The four instances of the function f 306 in the auto-encoder may be either the same or different.

In the auto-encoder 300, the matrices Vₖ 307, Wₖ 308, Sₖ 309, Tₖ 310, Uₖ 311, U'ₖ 312, W'ₖ 313, S'ₖ 314, T'ₖ 315 and V'ₖ 316 are learnable matrices. Some of these matrices may be set at zero, but of matrices Vₖ 307, Wₖ 308 at least one matrix needs to be non-zero, likewise as for matrices V'ₖ 316 and W'ₖ 313. The same holds for matrices Sₖ 309, Tₖ 310, Uₖ 311 and likewise for S'ₖ 314, T'ₖ 315, U'ₖ 312.

In one part 317 of the auto-encoder 300, a label L_{i,k}(tᵢ) 301 assigned to a data packet is relabelled into L_{i,k+1}(tᵢ) 303, while in another part 318 the matrices U'ₖ 312, W'ₖ 313, S'ₖ 314, T'ₖ 315 and V'ₖ 316 are learned such that a reconstructed label L'_{i,k}(tᵢ) 302, after encoding and decoding, closely resemble to the original label L_{i,k}(tᵢ) 301. This condition puts restrictions on matrices Vₖ 307, Wₖ 308, Sₖ 309, Tₖ 310, Uₖ 311, U'ₖ 312, W'ₖ 313, S'ₖ 314, T'ₖ 315 and V'ₖ 316 and may be used to learn these matrices at each instant tᵢ or a subset of this instant. The matrices are updated such that a difference between labels L_{i,k}(tᵢ) 301 and L'_{i,k}(tᵢ) 302 is minimized.

The new history H_{i,k}(tᵢ) 319 on time tᵢ is calculated based on the previous history H_{i,k}(tᵢ₋₁) 304 and labels L_{i,k}(tᵢ) 301 and L_{i,k+1}(tᵢ) 303, respectively before and after a relabelling.

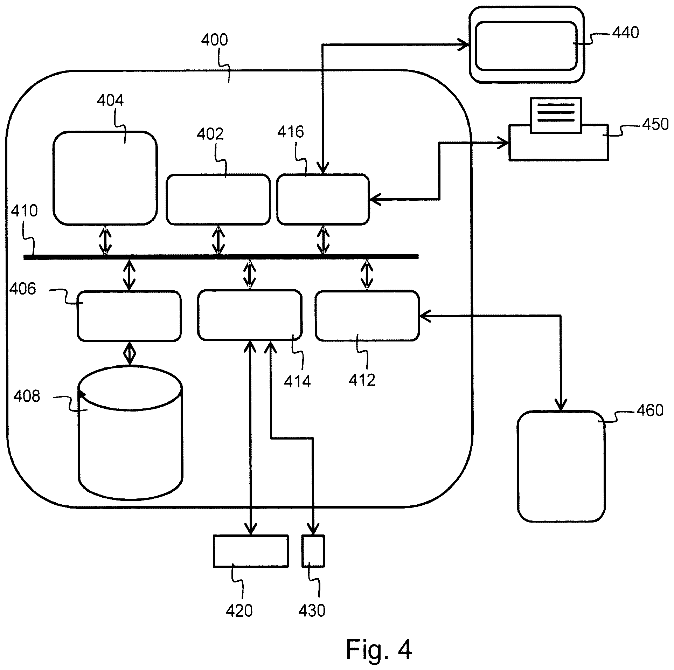

Figure 4 shows a suitable computing system 400 for performing the steps according to the above embodiments. Computing system 400 may be used as a networking device 100 for forwarding data packets over a network. Computing system 400 may in general be formed as a suitable general purpose computer and comprise a bus 410, a processor 402, a local memory 404, one or more optional input interfaces 414, one or more optional output interfaces 416, a communication interface 412, a storage element interface 406 and one or more storage elements 408. Bus 410 may comprise one or more conductors that permit communication among the components of the computing system 400. Processor 402 may include any type of conventional processor or microprocessor that interprets and executes programming instructions. Local memory 404 may include a random access memory (RAM) or another type of dynamic storage device that stores information and instructions for execution by processor 402 and/or a read only memory (ROM) or another type of static storage device that stores static information and instructions for use by processor 402. Input interface 414 may comprise one or more conventional mechanisms that permit an operator to input information to the computing device 400, such as a keyboard 420, a mouse 430, a pen, voice recognition and/or biometric mechanisms, etc. Output interface 416 may comprise one or more conventional mechanisms that output information to the operator, such as a display 440, etc. Communication interface 412 may comprise any transceiver-like mechanism such as for example one or more Ethernet interfaces that enables computing system 400 to communicate with other devices and/or systems 460. The communication interface 412 of computing system 400 may be connected to such another computing system by means of a local area network (LAN) or a wide area network (WAN) such as for example the internet. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used. The system 400 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A networking device for forwarding data packets over a network, the device comprising a grouping module for grouping the data packets into sets between endpoints wherein the grouping module comprises a neural network trained to classify data packets between endpoints into the sets based on a packet size and a packet arrival time.

2. The networking device according to claim 1, wherein the data packets are further **characterised by** a transport layer source and destination ports and wherein the neural network further is trained to classify data packets between endpoints into sets based on the transport layer source and destination ports.

3. The networking device according to claim 2, wherein the neural network comprises an auto-encoder neural network.

4. The networking device according to claim 2, wherein the neural network comprises a stack of auto-encoder neural networks.

5. The networking device according to claim 3, wherein the auto-encoder neural networks comprises recurrent neural networks.

6. The networking device according to claim 3, wherein the auto-encoder neural networks comprises feed-forward neural networks.

7. The networking device according to claim 2, wherein the neural network comprises a restricted Boltzmann machine.

8. Method for forwarding data packets over a network, the method comprising grouping the data packets into sets wherein the grouping comprises training to classify data packets into the sets based on a packet size and a packet arrival time.

9. A computer program product comprising a computer-executable instructions for performing the method according to claim 8 when the program is run on a computer.

10. A computer readable storage medium comprising the computer program product according to claim 9.

11. A data processing system programmed for carrying out the method according to claim 8.
